# EUROPEAN PATENT APPLICATION

(11) **EP 4 418 145 A1**
(43) Date of publication of application: **21.08.2024**
(21) Application number: 22880868.9
(22) Date of filing: 04.10.2022
(51) Int. Cl.: G06F 16/903, G06Q 10/0633

(54) **WORK INFORMATION MANAGEMENT SYSTEM AND DATA SEARCH METHOD**

(30) Priority: 11.10.2021 JP 2021166600
(71) Applicant: Hitachi, Ltd., Tokyo 100-8280 (JP)
(72) Inventor: YOSHIUCHI, Hideya, Tokyo 100-8280 (JP); MORITA, Hidekazu, Tokyo 100-8280 (JP); KURATA, Sayaka, Tokyo 100-8280 (JP); MIYAMOTO, Hiroki, Tokyo 100-8280 (JP)
(74) Representative: MERH-IP Matias Erny Reichl Hoffmann Patentanwälte PartG mbB
(86) International application number: PCT/JP2022/037144
(87) International publication number: WO 2023/063172

(57) **Abstract**

A business information management server 1 includes: a performance data collection unit that collects performance data of each business process from a data generation device 4 for each business flow, and stores the collected performance data in a storage device in association with a business in the business process and related elements related to the business; and a performance data search unit that, when a business flow and a search condition regarding similarity of performance data are designated together with a reference business flow, extracts a business flow similar to the reference business flow from among a plurality of business flows associated with the performance data stored in the storage device on the basis of the search condition, extracts performance data similar to performance data of the reference business flow from among the performance data of the extracted business flow, and outputs an extraction result.

## Description

### Technical Field

The present invention relates to a business information management system and a data search method, and is suitably applied to a business information management system that manages performance data in development of material research and a data search method thereof.

### Background Art

In the field of material research and development, research and development of material informatics (MI) that accelerates development of new products by integrating and analyzing existing experimental data has been promoted.

In order to promote data utilization of material research, it is necessary to comprehensively describe a business flow targeted by material research in a research and development process and efficiently manage related experimental data. In addition, material research is repetition of trial and error, and a business flow is frequently updated due to a change in experimental conditions and procedures in each process. Therefore, it is necessary to record these changes and associate them with performance data acquired in the research and development process.

Here, for example, PTL 1 discloses a technique of creating an analysis flow using existing performance data. The analysis flow creation system disclosed in PTL 1 accumulates the analysis flow of the past case in which the abnormality of the machine is detected by analyzing the operation data of the machine and the intermediate information having the space for inputting the setting parameter and the know-how information of each analysis procedure of the analysis flow currently being created. When the user newly creates the analysis flow, the user searches the know-how information from the accumulated intermediate information of the past case, and creates the analysis flow with reference to the search result.

### Citation List

### Patent Literature

PTL 1: JP 2020-008918 A

### Summary of Invention

### Technical Problem

Meanwhile, in material research and development, it is required to search for performance data close to data currently under experiment. At this time, it is convenient to search for similar business flows in consideration of differences in experimental conditions and procedures from among business flows associated with various past performance data, and search for performance data similar to desired data from among these business flows. However, the technology disclosed in PTL 1 is intended to simplify creation of a flow, and does not have a function of searching for a business flow or performance data.

The present invention has been made in view of the above points, and an object of the present invention is to propose a business information management system and a data search method capable of executing search using similarity between -a business flow and performance data as a search condition with respect to a business flow associated with past performance data.

### Solution to Problem

In order to solve such a problem, in the present invention, there is provided a business information management system that manages business information regarding each business process of each of a plurality of business flows each including one or more business processes, the business information management system including: a data generation device that generates performance data in the business process; and a business information management server that collects performance data generated by the data generation device and manages the performance data in association with a configuration of the executed business flow, in which the business information management server includes: a performance data collection unit that collects performance data of each business process from the data generation device for each of the business flows, and stores the collected performance data in a storage device in association with a business in the business process and a related element related to the business; and a performance data search unit that, when a business flow and a search condition regarding similarity of performance data are designated together with a reference business flow that is a business flow as a reference, extracts a business flow similar to the reference business flow from among a plurality of business flows associated with the performance data stored in the storage device on the basis of the search condition, extracts performance data similar to performance data of the reference business flow from among the performance data of the extracted business flow, and outputs an extraction result.

In order to solve such a problem, according to the present invention, there is provided a data search method by a business information management system that manages business information regarding each business process of each of a plurality of business flows each including one or more business processes, the business information management system including: a data generation device that generates performance data in the business process; and a business information management server that collects performance data generated by the data generation device and manages the performance data in association with a configuration of the executed business flow; and the data search method including: a performance data collection step of collecting, by the business information management server, performance data of each business process from the data generation device for each of the business flows, and storing the collected performance data in a storage device in association with a business in the business process and a related element related to the business; and a performance data search step of, when a business flow and a search condition regarding similarity of performance data are designated together with a reference business flow that is a business flow as a reference, extracting, by the business information management server, a business flow similar to the reference business flow from among a plurality of business flows associated with the performance data stored in the storage device on the basis of the search condition, extracting performance data similar to performance data of the reference business flow from among the performance data of the extracted business flow, and outputting an extraction result.

### Advantageous Effects of Invention

According to the present invention, it is possible to search for a business flow similar to a business flow as a reference (reference business flow) from among business flows associated with past performance data, and extract performance data similar to desired data from among these business flows.

### Brief Description of Drawings

[FIG. 1] FIG. 1 is a block diagram illustrating a configuration example of a business information management system according to an embodiment of the present invention.
[FIG. 2] FIG. 2 depicts a block diagram illustrating an internal configuration example of a business information management server 1.
[FIG. 3] FIG. 3 is a diagram illustrating a data configuration example of a business information DB 163.
[FIG. 4] FIG. 4 depicts a diagram illustrating a data configuration example of a reference business flow information DB 164.
[FIG. 5] FIG. 5 is a diagram illustrating a data configuration example of a business-related element information DB 165.
[FIG. 6] FIG. 6 is a diagram illustrating a data configuration example of a business performance information DB 167.
[FIG. 7] FIG. 7 depicts a diagram illustrating a data configuration example of a business-related element performance information DB 168.
[FIG. 8] FIG. 8 is a diagram illustrating a data configuration example of a performance similarity information DB 169.
[FIG. 9] FIG. 9 is a schematic diagram illustrating an example of business information.
[FIG. 10] FIG. 10 is a schematic diagram illustrating an example of a business flow.
[FIG. 11] FIG. 11 is a block diagram illustrating an internal configuration example of a business information management terminal 2.
[FIG. 12] FIG. 12 is a block diagram illustrating an internal configuration example of a business information collection terminal 3.
[FIG. 13] FIG. 13 is a diagram illustrating a data configuration example of a device operation information DB 363.
[FIG. 14] FIG. 14 is a sequence diagram illustrating a processing procedure example of performance data collection processing.
[FIG. 15] FIG. 15 is a sequence diagram illustrating an overall processing procedure example of performance data search processing.
[FIG. 16] FIG. 16 is a flowchart illustrating a processing procedure example of performance data search processing in the business information management server 1.
[FIG. 17] FIG. 17 is a diagram illustrating an example of a performance data search screen.
[FIG. 18] FIG. 18 is a diagram illustrating an example of a reference business flow setting screen.
[FIG. 19] FIG. 19 is a diagram illustrating an example of a data similarity setting screen.
[FIG. 20] FIG. 20 is a diagram illustrating another example of the data similarity setting screen.
[FIG. 21] FIG. 21 is a flowchart illustrating a processing procedure example of data similarity candidate generation processing.
[FIG. 22] FIG. 22 is a sequence diagram illustrating an overall processing procedure example of reliability setting processing.
[FIG. 23] FIG. 23 is a view illustrating an example of a reliability setting screen.
[FIG. 24] FIG. 24 is a diagram illustrating another example of the performance data search screen.
[FIG. 25] FIG. 25 is a diagram illustrating an example of a performance data factor analysis screen.
[FIG. 26] FIG. 26 is a flowchart illustrating a processing procedure example of performance data factor analysis processing.

### Description of Embodiments

Hereinafter, embodiments of the present invention will be described with reference to the drawings.

Note that the following description and drawings are examples for describing the present invention, and omission and simplification are appropriately made for clarity of description. In addition, not all combinations of features described in the embodiments are essential to the solution of the invention. The present invention is not limited to the embodiments, and all application examples consistent with the idea of the present invention are included in the technical scope of the present invention. Those skilled in the art can make various additions, modifications, and the like to the present invention within the scope of the present invention. The present invention can be carried out also in various other forms. Unless otherwise specified, each component may be singular or plural.

In the following description, various types, of information may be described with expressions such as "DB", "table", "table", "list", and "queue", but the various types of information may be expressed with a data structure other than these. The "XX table", the "XX list", and the like may be referred to as "XX information" to indicate that they do not depend on the data structure. Expressions such as "identification information" "identifier" "name", "ID", and "number" are used to describe the content of each piece of information, but these expressions can be replaced with each other.

In addition, in the following description, in a case where the same kind of elements are described without being distinguished, a common portion (a portion excluding a subscript or a branch number) of reference numerals including a subscript or a branch number is used, and in a case where the same kind of elements are described while being distinguished, reference numerals including a subscript or a branch number are used. For example, the business information collection terminal is described as a "business information collection terminal 3" when described without being particularly distinguished, whereas the individual business information collection terminals 3 are described as a "business information collection terminal 3-1", ..., and a "business information collection terminal 3-M" when described while being distinguished. In addition, in a case where the data generation devices are described without being particularly distinguished, they are described as "data generation device 4", whereas in a case where the individual data generation devices connected to a specific business information collection terminal 3 are indicated, they are described by combining subscripts and branch numbers. Specifically, for example, the data generation device 4 connected to the data generation device 4-M is described as "data generation device 4-M1" or "data generation device 4-M2".

In addition, in the following description, processing performed by executing a program may be described. However, the program is executed by at least one processor (for example, a CPU) to perform predetermined processing using a storage resource (for example, a memory) and/or an interface device (for example, a communication port) as appropriate. Therefore, the subject of the processing may be a processor. Similarly, the subject of the processing performed by executing the program may be a controller, a device, a system, a computer, a node, a storage system, a storage device, a server, a management computer, a client, or a host having a processor. The subject (for example, a processor) of the processing performed by executing the program may include a hardware circuit that performs a part or all of the processing. For example, the subject of the processing performed by executing the program may include a hardware circuit that performs encryption and decryption or compression and decompression. The processor operates as a functional unit that implements a predetermined function by operating according to the program. A device and a system including a processor are a device and a system including these functional units.

The program may be installed in a device such as a computer from a program source. The program source may be, for example, a program distribution server or a computer-readable storage medium. When the program source is a program distribution server, the program distribution server includes a processor (for example, a CPU) and a storage resource, and the storage resource may further store a distribution program and a program to be distributed. Then, when the processor of the program distribution server executes the distribution program, the processor of the program distribution server may distribute the distribution target program to another computer. In the following description, two or more programs may be implemented as one program, or one program may be implemented as two or more programs.

A main object of the present invention is to perform data search by designating a business flow and similarity of performance data as a search condition from among business flows associated with past performance data, specifically, to search and extract (similar business flow search) a business flow satisfying the similarity of the business flows with respect to a business flow as a search reference (reference business flow), and further search and extract (similar performance data search) performance data satisfying the similarity of the performance data from among these business flows. In the following description, a series of processing of the similar business flow search and the similar performance data search described above is referred to as "performance data search".

In the following description, "performance" is a work history performed according to a business flow, and specifically, is information indicating when, who performed what operation, and in which business. A "performance value" is a value indicating a result of the performance, and specifically, for example, represents work time, the number of materials, and the like. The "business flow" is configured by connecting one or more business processes, and information regarding each business process is managed as business information (one record of business information DB 163 to be described later). A business process (also simply referred to as a business) can be considered to include a business (business node) and a work-related element (a business-related element node) that is a related element related to the business, and a connection relationship between the business processes can be determined on the basis of matching of performance values of predetermined business-related elements (specific performance values of the business-related item in the business-related element performance information DB 168 to be described later). The information indicating the connection relationship between the business processes may be separately held, but is not illustrated. The "business information" may indicate a generic name of information regarding business, and means a business flow or business performance. The "performance data" is data including a performance value of a business performance or a business related element, and may include information other than the performance value.

### (1) Configuration

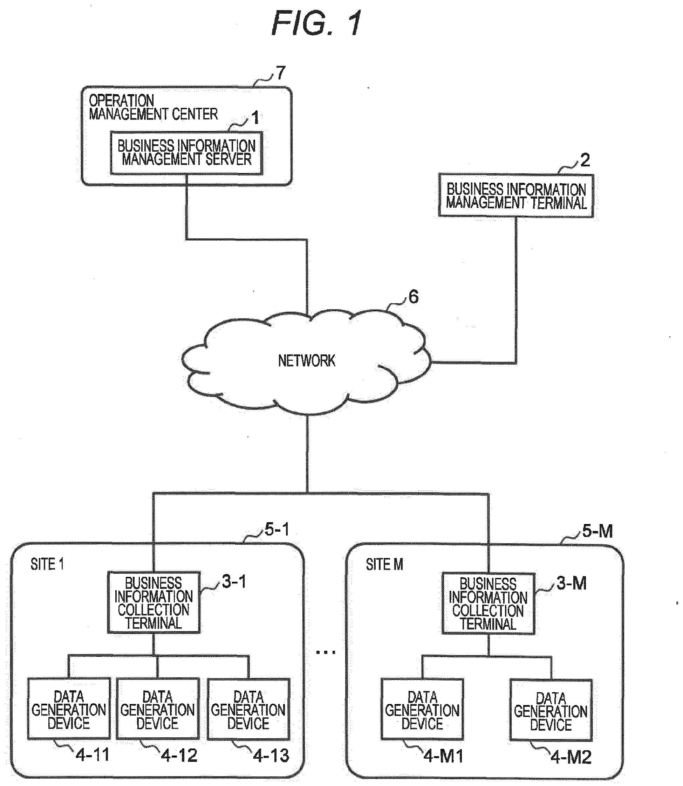

FIG. 1 is a block diagram illustrating a configuration example of a business information management system according to an embodiment of the present invention. The business information management system illustrated in FIG. 1 includes a business information management server 1, a business information management terminal 2, a business information collection terminal 3, and a data generation device 4.

The business information management server 1, the business information management terminal 2, and the business information collection terminal 3 are connected to each other via a network 6. The business information management server 1 is installed in an operation management center 7 that manages and operates business information. The business information management terminal 2 is a terminal operated by a user, and an installation place thereof is not particularly limited. The business information collection terminal 3 and the data generation device 4 are installed in one or more sites 5 (individually, sites 5-1 to 5-M), and one or more data generation devices 4 are connected to one business information collection terminal 3 in the same site 5.. Note that the site 5 indicates a facility or the like where experiments or studies are performed, but the classification thereof is not particularly limited.

The data generation device 4 is a device that generates various performance data with execution of a work process, and is, for example, an experimental device that processes a material or the like, a peripheral device that records a work log, an experimental condition, a sensor, or the like, or the like. The data generation device 4 transmits various performance data generated with the operation of the own device to the business information collection terminal 3 of the connection destination. The business information collection terminal 3 transmits the performance data collected from the data generation device 4 to the business information management server via the network 6.

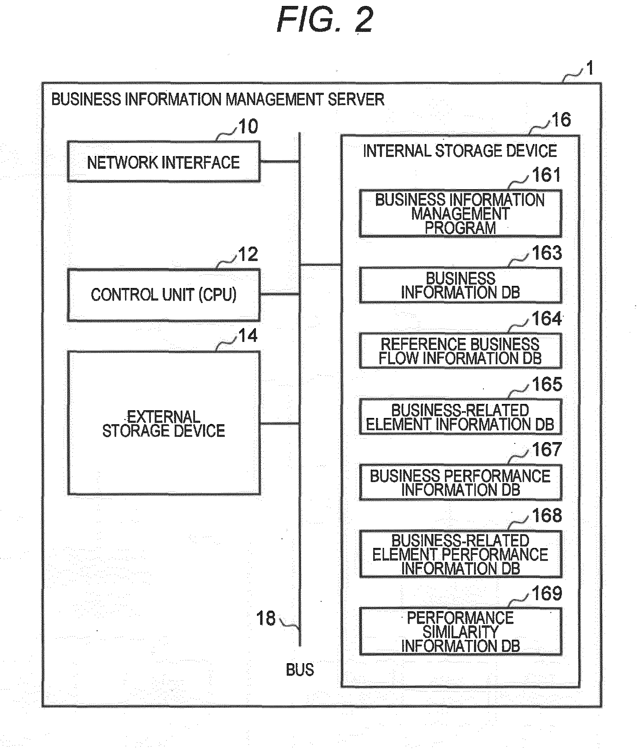

FIG. 2 depicts a block diagram illustrating an internal configuration example of the business information management server 1. The business information management server 1 is implemented by, for example, a general server computer, and includes, as illustrated in FIG. 2, a network interface 10, a control unit (CPU) 12, an external storage device 14, and an internal storage device 16 which are connected with each other via a bus 18.

The network interface 10 is an interface for connecting the business information management server 1 and the outside, and is, for example, an input/output interface, a communication interface, or the like.

The control unit 12 is, for example, a processor such as a central processing unit (CPU), and implements a predetermined function by executing a program (for example, a business information management program 161) stored in the external storage device 14 or the internal storage device 16.

The external storage device 14 is a device that stores programs and data, and is specifically, for example, a solid state drive (SSD), a hard disk drive (HDD), or the like. Each data and program shown in the internal storage device 16 in FIG. 2 may be stored in the external storage device 14, and in that case, each data and program are temporarily stored in the internal storage device 16 as necessary and executed by the control unit 12.

The internal storage device 16 is, for example, a memory, and stores programs and data directly controlled by the control unit 12. Specifically, the internal storage device 16 stores a business information management program 161, a business information DB 163, a reference business flow information DB 164, a business-related element information DB 165, a business performance information DB 167, a business-related element performance information DB 168, and a performance similarity information DB 169. The business information management program 161 is a program executed by the control unit 12, and is a program for the business information management server 1 to request/respond to predetermined control processing with the business information management terminal 2 or the business information collection terminal 3, and execute predetermined data processing or the like inside the business information management server 1. Specific processing provided by the business information management program 161 will be described later.

Hereinafter, a data configuration of various types of information stored in the internal storage device 16 of the business information management server 1 illustrated in FIG. 2 will be described.

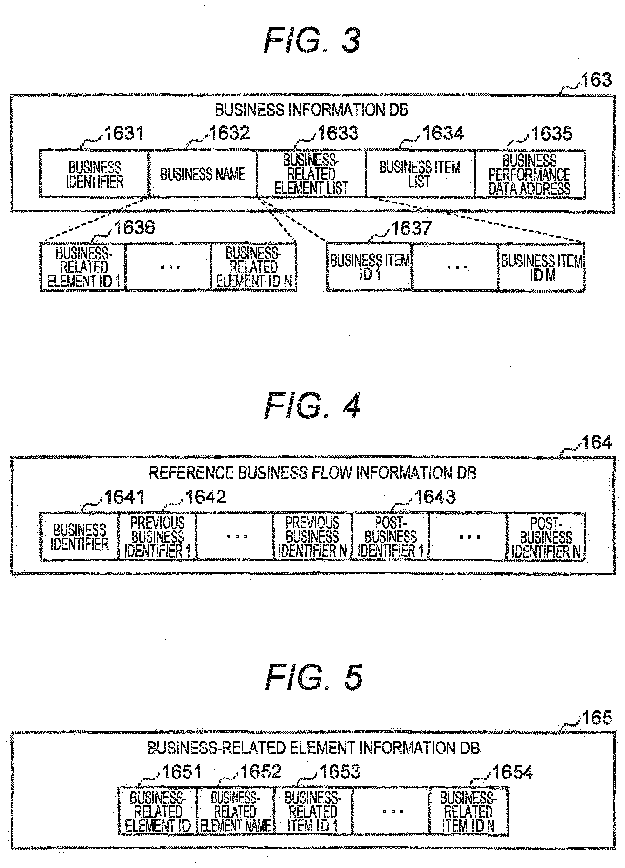

FIG. 3 is a diagram illustrating a data configuration example of the business information DB 163. The business information DB 163 is table data that holds configuration information (business information) of each business constituting a business flow, and has a record in a business unit corresponding to one process. The business information DB 163 includes data items of a business identifier 1631, a business name 1632, a business-related element list 1633, a business item list 1634, and a business performance data address 1635.

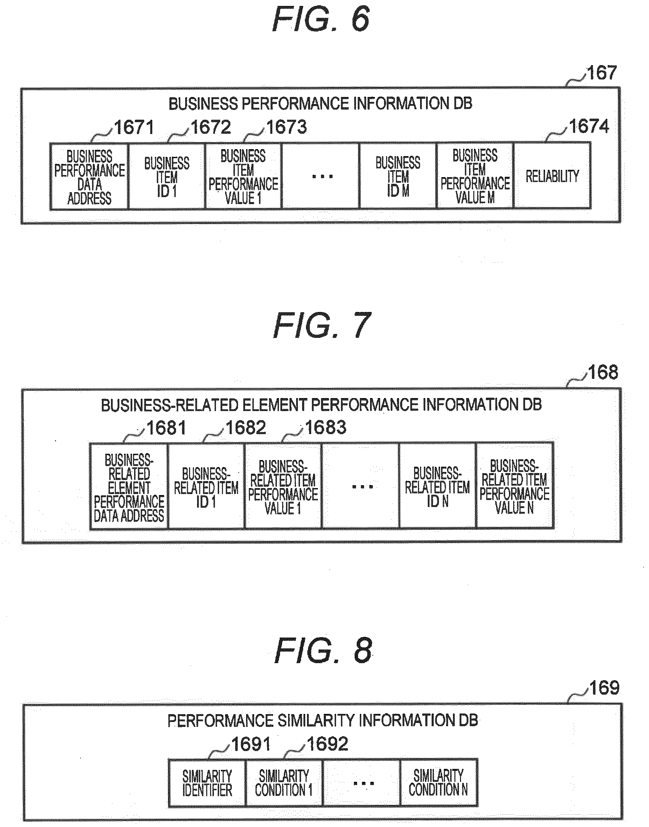

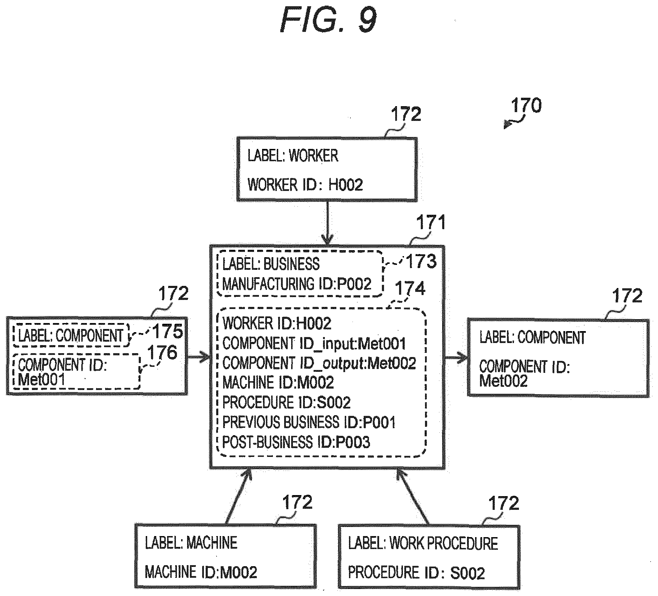

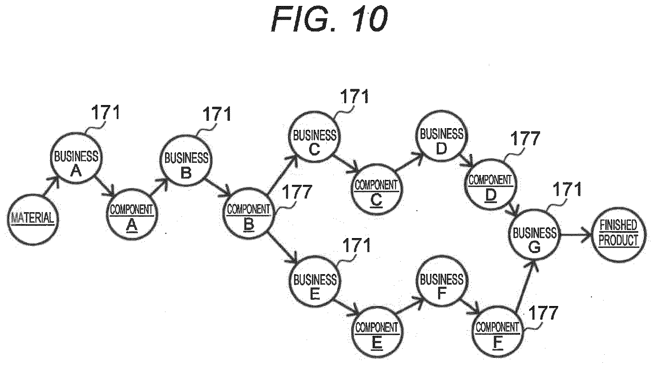

The business identifier 1631 indicates an identifier (for example, a label or a manufacturing ID) assigned to the business information. Even if the detailed configurations of the business name 1632 and the like are the same, it may be considered that a different business identifier is allocated to the business identifier 1631 for each business flow. The business name 1632 indicates the name of the business. The business-related element list 1633 is a list that manages elements related to business (business-related elements), and stores an identifier (business-related element ID 1636) assigned to each business-related element. The business item list 1634 is a list that manages items (business items) of the components of the business, and stores an identifier (business item ID 1637) assigned to each business item. The business performance data address 1635 indicates a storage destination address of the business performance data, and corresponds to a business performance data address 1671 of the business performance information DB 167 of FIG. 6 to be described later. Note that FIG. 9 to be described later illustrates a schematic diagram of business information, and FIG. 10 illustrates a schematic diagram of a business flow.

FIG. 4 depicts a diagram illustrating a data configuration example of a reference business flow information DB 164. The reference business flow information DB 164 is table data that holds registration information of a reference business flow, and is configured to hold a connection relationship between businesses. The reference business flow information DB 164 includes data items of a business identifier 1641 indicating an identifier of one business constituting the reference business flow, a previous business identifier 1642 indicating an identifier of a previous business connected to the front side of the business of the business identifier 1641, and-a subsequent business identifier 1643 indicating an identifier of a subsequent business connected to the rear side of the business of the business identifier 1641. The identifiers stored in the business identifier 1641, the previous business identifier 1642, and the subsequent business identifier 1643 are business identifiers used for the business identifier 1631 of the business information DB 163. Although detailed description is omitted, the business information management server 1 can recognize the context of the business by referring to other information stored in the internal storage device 16 even if the previous business identifier and the subsequent business identifier are not explicitly retained.

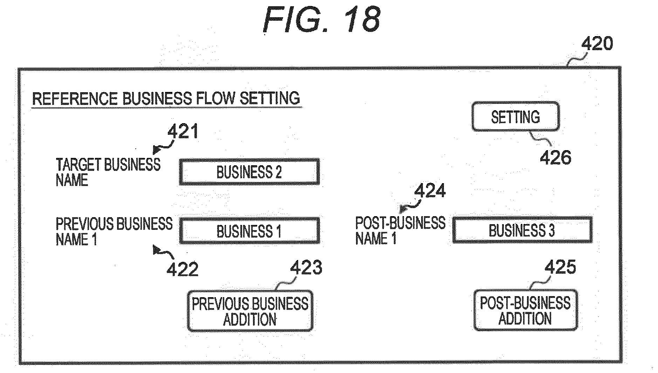

The reference business flow is a business flow used as a reference at the time of performance data search. In the present embodiment, one or a plurality of reference business flows are registered in the reference business flow information DB 164, and a reference business flow to be used in performance data search can be selected from among the registered reference business flows. For example, a predetermined graphical user interface (GUI) (for example, a reference business flow setting screen 420 in FIG. 18 to be described later) is used to register the reference business flow in the reference business flow information DB 164. Note that the user may manually create the reference business flow at the time of performance data search.

FIG. 5 is a diagram illustrating a data configuration example of a business-related element information DB 165. The business-related element information DB 165 is table data that holds configuration information of a business-related element, and has a record in units of business-related elements. The business-related element information DB 165 includes data items of a business-related element ID 1651, a business-related element name 1652, a business-related item ID 1653, and a business-related element performance data address 1654.

The business-related element ID 1651 is an identifier (a business-related element ID) assigned to the business-related element and corresponds to the business-related element ID 1636 recorded in the business-related element list 1633 of the business information DB 163. The business-related element name 1652 indicates a name of the business-related element. The business-related item ID 1653 indicates an identifier (business-related item ID) assigned to each of the business-related items in order to manage an item (business-related item) of a component of the business-related element. The business-related element performance data address 1654 indicates a storage destination address of the performance data of the business-related element, and corresponds to a business-related element performance data address 1681 of the business-related element performance information DB 168 of FIG. 7 to be described later.

FIG. 6 is a diagram illustrating a data configuration example of a business performance information DB 167. The business performance information DB 167 is table data that manages business performance data (business performance), and includes data items of a business performance data address 1671, a business item ID 1672, a business item performance value 1673, and a reliability 1674.

The business performance data address 1671 indicates a storage destination address of data from all the business item IDs 1672 to the business item performance value 1673 (or to the reliability 1674) in the record, and may be, for example, a value of a start address thereof. The business item ID 1672 corresponds to the business item ID 1637 recorded in the business item list 1634 of the business information DB 163. The business item performance value 1673 indicates a performance value of each business item corresponding to the business item ID 1672. The reliability 1674 indicates the reliability of the business performance in the record. The reliability of the business performance is, for example, an evaluation value for an experimental result in the business, and is set by the user as described later.

FIG. 7 depicts a diagram illustrating a data configuration example of a business-related element performance information DB 168. The business-related element performance information DB 168 is table data that manages performance data (business-related element performance) of the business-related element, and includes data items of a business-related element performance data address 1681, a business-related item ID 1682, and a business-related item performance value 1683.

The business-related element performance data address 1681 indicates a storage destination address of data from all the business-related item IDs 1682 to the business-related item performance value 1683 in the record, and may be, for example, a value of the start address thereof. The business-related item ID 1682 corresponds to the business-related item ID 1653 of the business-related element information DB 165. The business-related item performance value 1683 indicates a performance value of each of the business-related items corresponding to the business-related item ID 1682.

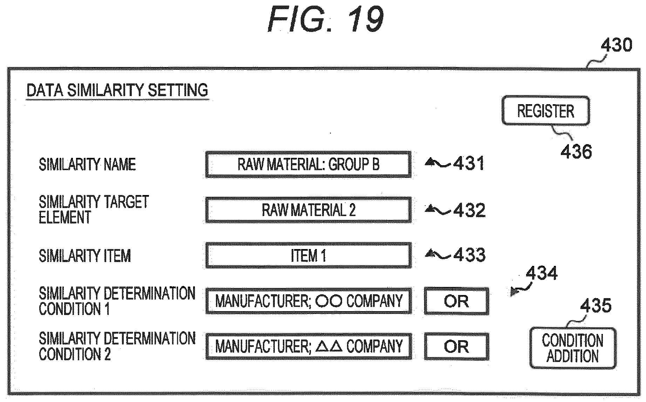

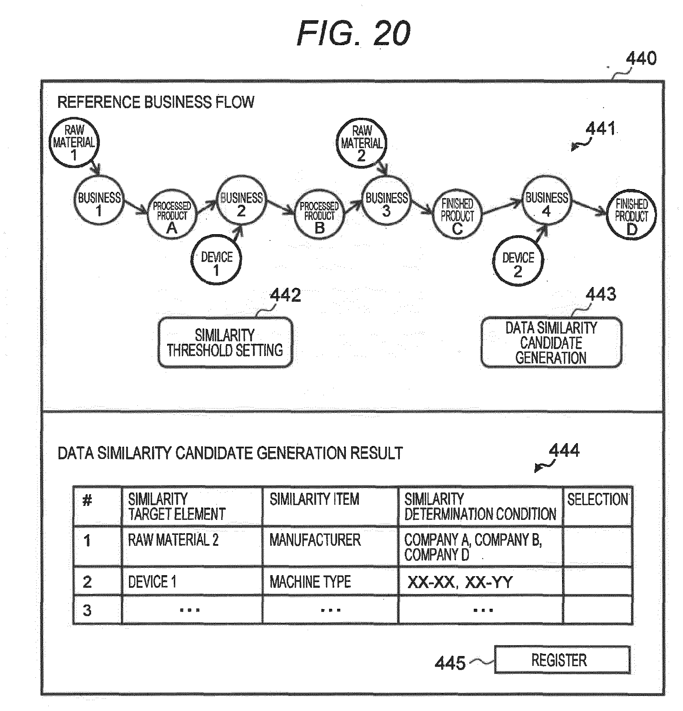

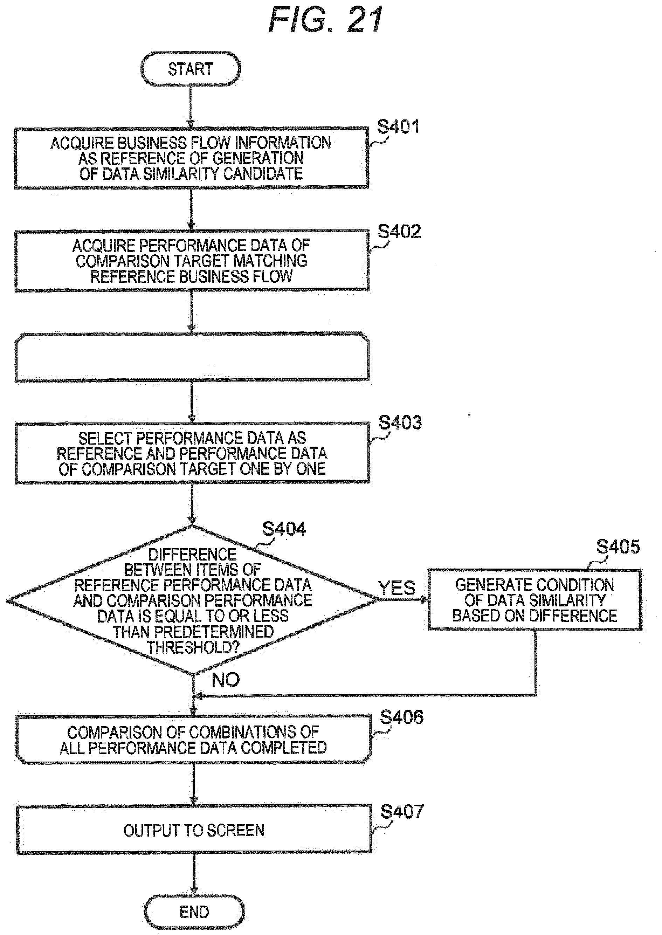

FIG. 8 is a diagram illustrating a data configuration example of a performance similarity information DB 169. The performance similarity information DB 169 is table data that holds registration information of data similarity that can be designated as a search condition for similarity of the performance data at the time of performance data search, and includes data items of a similarity identifier 1691 and a similarity condition 1692. Although details will be described later, in the present embodiment, the "data similarity" may be registered by the user using a predetermined graphical user interface (for example, a data similarity setting screen 430 in FIG. 19 to be described later), or a data similarity candidate may be calculated from a reference business flow by performing predetermined program processing, and the user may select and register the data similarity from the calculated candidates (See FIGS. 20 and 21).

The similarity identifier 1691 indicates an identifier assigned to each data similarity registered in the performance similarity information DB 169. The similarity condition 1692 indicates a condition (corresponding to the similarity determination condition illustrated in FIG. 19) used to determine data similarity., A plurality of conditions may be registered in the similarity condition 1692. Note that, although illustration is omitted, the performance similarity information DB 169 may be considered to include, in addition to the above-described data items, data items that hold various types of information regarding data similarity (specifically, the similarity name, the similarity target element, and the similarity item illustrated in FIG. 19).

FIG. 9 is a schematic diagram illustrating an example of business information. FIG. 9 schematically illustrates business information 170 for one of the businesses constituting the business flow. The business information 170 is configured by connecting a business-related element node 172 having information related to a business-related element necessary for executing the business to one business node 171 having information related to the business process. In order to execute one business, a plurality of business-related elements such as a component (input component) used as a raw material in a work process of the business, a component (output component) generated in the work process, a machine used in the work process, and a worker in the work process are generally required. Therefore, a plurality of business-related element nodes 172 are connected to one business node 171.

In the business node 171, the name of the business (business name 1632)is indicated in an area 173, and the identifier (business item IDs 1637 and 1672) for each business item in the business is indicated in an area 174.

In the business-related element node 172, the name of the business-related element (the business-related element name 1652) is indicated in an area 175, and the identifier (the business-related item IDs 1653 and 1682) for each of the business-related items in the business-related element is indicated in an area 176.

FIG. 10 is a schematic diagram illustrating an example of a business flow. FIG. 10 illustrates a connection relationship between a plurality of businesses (the business node 171) constituting the business flow and a component node 177 indicating an input component or an output component in each business. The component node 177 is a node belonging to the business-related element node 172 illustrated in FIG. 9.

In the business flow illustrated in FIG. 10, for example, a component node 177 of a component B associated with a business node 171 of a business B is input as an input of one or more other business nodes 171 (business C, business E). In addition, a component node 177 of a component D generated by a business node 171 of a business D and a component node 177 of a component F generated by a business node 171 of a business F are used as an input of one business node 171 (business G) .

In other words, in the business flow of FIG. 10, a plurality of components B are produced by performing the business B corresponding to the preceding process (preceding business), and the plurality of components B are used as materials of the business C and the business E corresponding to the subsequent process (subsequent business). In the business G, it can be seen that the component D produced in the business D and the component F produced in the business F are used as materials to produce a finished product.

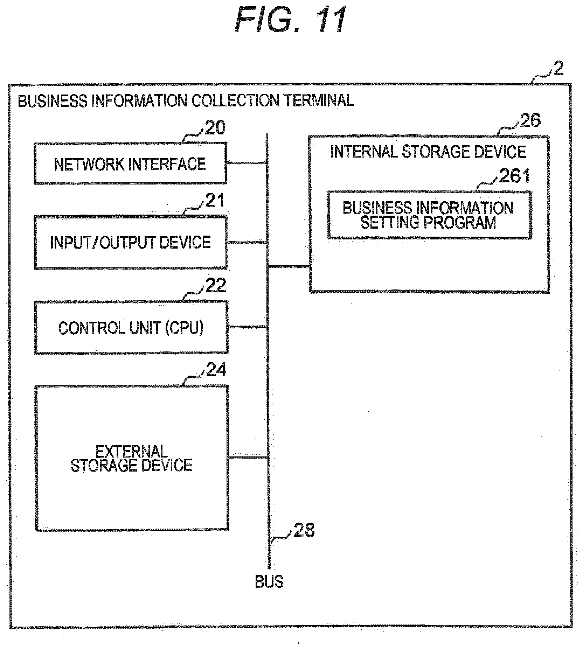

FIG. 11 is a block diagram illustrating an internal configuration example of the business information management terminal 2. The business information management terminal 2 is a terminal used by a user, and is implemented by, for example, a general computer. As illustrated in FIG. 11, the business information management terminal 2 includes a network interface 20, an input/output device 21, a control unit (CPU) 22, an external storage device 24, and an internal storage device 26, which are connected with each other via a bus 28. The internal configuration of the business information management terminal 2 illustrated in FIG. 11 is common to the internal configuration of the business information management server 1 illustrated in FIG. 2 in many parts, and repeated description thereof will be omitted.

As a difference from the internal configuration illustrated in FIG. 2, the business information management terminal 2 illustrated in FIG. 11 includes an input/output device 21 and stores a business information setting program 261 in the internal storage device 26. The input/output device 21 is an input device operated by the user for information input in the business information management terminal 2 and an output device that outputs information to the user, and is specifically implemented by, for example, an input device such as a keyboard and a mouse and an output device such as a display. The business information setting program 261 is a program executed by the control unit 12, and provides operation functions for various GUIs for performing performance data search, setting of various types of information, and the like. Note that the various GUIs are provided from the business information management server 1.

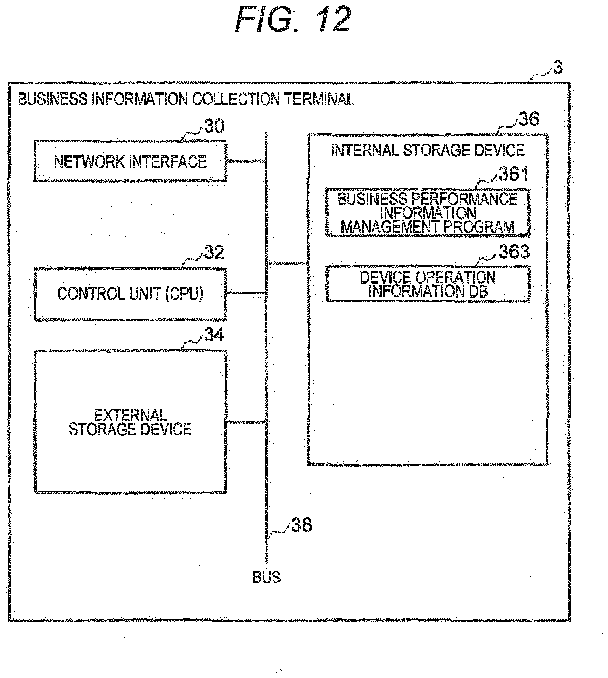

FIG. 12 is a block diagram illustrating an internal configuration example of the business information collection terminal 3. The business information collection terminal 3 is, for example, an IoT gateway, collects performance data from one or more data generation devices 4 connected to the business information collection terminal 3, registers the performance data in a device operation information DB 363, and transmits registration information (device operation information) of the device operation information DB 363 in response to a request from the business information management server 1. As illustrated in FIG. 12, the business information collection terminal 3 includes a network interface 30, a control unit (CPU) 32, an external storage device 34, and an internal storage device 36, which are connected with each other via a bus 38. The internal configuration of the business information collection terminal 3 illustrated in FIG. 12 is common to the internal configuration of the business information management server 1 illustrated in FIG. 2 in many parts, and repeated description thereof will be omitted.

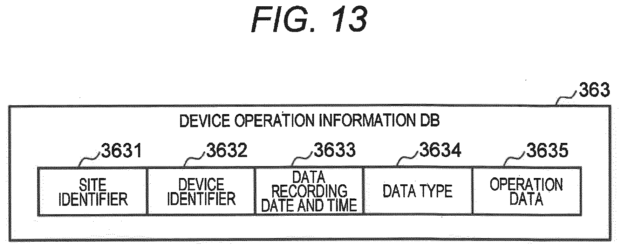

As a difference from the internal configuration illustrated in FIG. 2, the business information collection terminal 3 illustrated in FIG. 12 stores a business performance information management program 361 and a device operation information DB 363 in the internal storage device 36. The business performance information management program 361 is a program executed by the control unit 32, and provides a function of registering performance data collected from the data generation device 4 in the device operation information DB 363 and a function of transmitting registration information (device operation information) of the device operation information DB 363 to the business information management server 1. The device operation information DB 363 will be described in detail with reference to FIG. 13.

FIG. 13 is a diagram illustrating a data configuration example of the device operation information DB 363. The device operation information DB 363 is table data that holds information of performance data collected from the data generation device 4, and includes data items of a site identifier 3631, a device identifier 3632, a data recording date and time 3633, a data type 3634, and operation data 3635.

The site identifier 3631 indicates an identifier allocated to the site 5 in which the data generation device 4 of the generation source of the performance data is installed. When the data generation device 4 of the generation source of the performance data and the business information collection terminal 3 of the collection destination are installed in the same site 5, the identifier recorded in the site identifier 3631 has the same meaning as the identifier of the site 5 in which the data generation device. 4 is installed. The device identifier 3632 indicates an identifier allocated to the data generation device 4 of the generation source of the performance data. The data recording date and time 3633 indicates registration date and time (or occurrence date and time) of the collected performance data. The data type 3634 indicates a type of the collected performance data. The operation data 3635 indicates a value (performance value) of the collected performance data.

The performance data registered in the device operation information DB 363 includes not only performance data of business (business performance) but also performance data of a business-related element (business-related element performance). Then, the device operation information DB 363 may register the business performance and the business-related element performance in different, records. In addition, the device operation information registered in the device operation information DB 363 is appropriately registered mainly in the business performance information DB 167 and the business-related element performance information DB 168 in the business information management server 1 by performance data collection processing to be described later. Therefore, the data configuration of the device operation information DB 363 is not limited to the data items illustrated in FIG. 13, and may include other data items (for example, a business item ID or a business-related item) necessary for registration in the business performance information DB 167 and the business-related element performance information DB 168.

### (2) Processing

Hereinafter, various processing executed by the business information management system (particularly, the business information management server 1) according to the present embodiment will be described.

### (2-1) Performance data collection

First, performance data collection processing will be described. The performance data collection processing is processing of collecting performance data generated by the data generation device 4 to the business information management server 1 via the business information collection terminal 3, and is performed at an arbitrary timing. In addition, the performance data collection processing may be manually started, or may be started by a predetermined program in the business information collection terminal 3 or the business information management server 1.

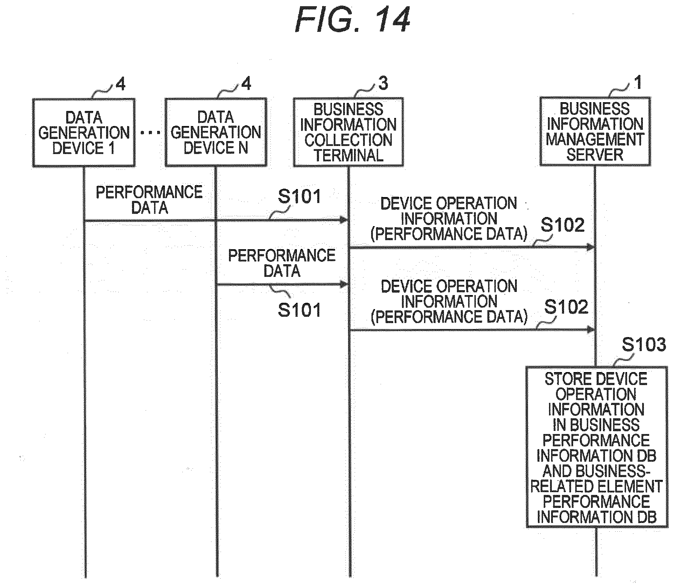

FIG. 14 is a sequence diagram illustrating a processing procedure example of the performance data collection processing.

According to FIG. 14, first, the data generation device 4. transmits performance data generated in the work process of the own device to the business information collection terminal 3 (step S101). At this time, the business information collection terminal 3 executes the business performance information management program 361 to register the device operation information based on the collected performance data in the device operation information DB 363. The processing in step S101 is executed from each data generation device 4 to the business information collection terminal 3 as a connection destination.

Next, the business information collection terminal 3 transmits the device operation information registered in the device operation information DB 363 in step S101 to the business information management server 1 via the network 6 (step S102). The processing in step S102 is executed by, for example, the business performance information management program 361 of the business information collection terminal 3.

Next, the business information management server 1 executes the business information management program 161 to store the device operation information received in step S102 in predetermined data items of the business performance information DB 167 and the business-related element performance information DB 168 (step S103). Specifically, for example, the operation data 3635 related to business is stored in the business item performance value 1673 of the business performance information DB 167, and the operation data 3635 related to the business-related element is stored in the business-related item performance value 1683 of the business-related element performance information DB 168. Further, in the business information management server 1, after the data is stored in step S103, data items (for example, the business performance data address 1635, the business-related element performance data address 1654, and the like) of various DBs of the internal storage device 16 related to the stored data are registered.

Note that the execution trigger of the processing of step S103 can be arbitrarily determined. Specifically, for example, the processing may be executed every time the processing of step S102 is performed from one business information collection terminal 3, may be executed after the processing of step S102 is performed from all the business information collection terminals 3, or may be executed periodically.

In addition, the business information management system according to the present embodiment may be configured without the business information collection terminal 3, and in this case, the performance data generated in each data generation device 4 is directly collected by the business information management server 1 via the network 6.

### (2-2) Performance data search

Next, performance data search will be described. The performance data search processing is processing of searching for and extracting performance data similar to the performance data selected by the user in the reference business flow from among the business flows associated with the past performance data on the basis of the business flow designated by the user and the search condition of the similarity of the performance data.

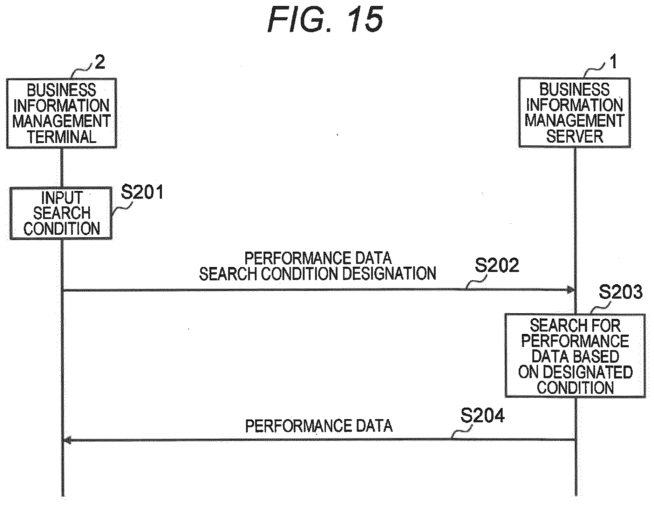

FIG. 15 is a sequence diagram illustrating an overall processing procedure example of the performance data search processing. FIG. 15 illustrates exchange between the business information management terminal 2 and the business information management server 1 accompanying data search.

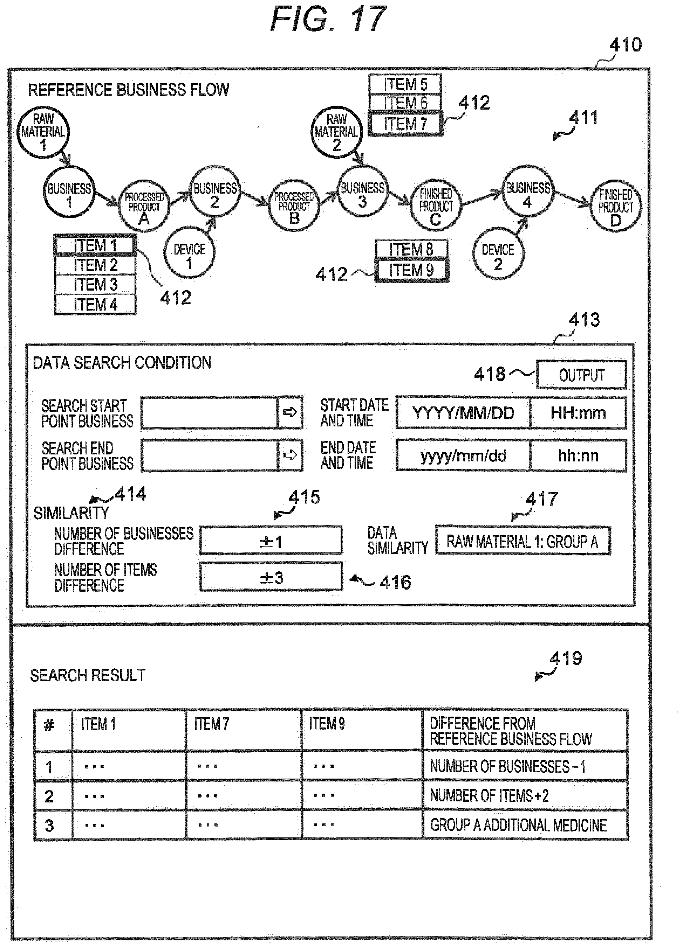

According to FIG. 15, first, in the business information management terminal 2, the user inputs a search condition for performance data search on the performance data search screen provided from the business information management server 1 (step S201). FIG. 17 to be described later illustrates a specific example of the performance data search screen. The search condition input in step S201 includes a search condition of the similarity of the business flow (specifically, the number of businesses difference and the number of items difference) and a search condition of the similarity of the performance data (specifically, data similarity), but other search conditions (for example, a search condition limiting the date and time) can also be designated.

Furthermore, in step S201, a reference business flow as a reference of the similar business flow search and an item of performance data as an extraction target of the performance data search (which may be either a business item or a business-related item) are also designated. The reference business flow may be selected by the user from the business flows registered in the reference business flow information DB 164, or may be directly created by the user. FIG. 18 to be described later illustrates an example of a reference business flow setting screen which is an operation screen for registering a reference business flow in the reference business flow information DB 164.

Next, a control unit 22 (the business information setting program 261) of the business information management terminal 2 transmits an execution instruction of performance data search to the business information management server 1 with the search condition input in step S201 (step S202). At this time, the reference business flow designated in step S201 and the information specifying the item of the performance data as an extraction target are also transmitted to the business information management server 1.

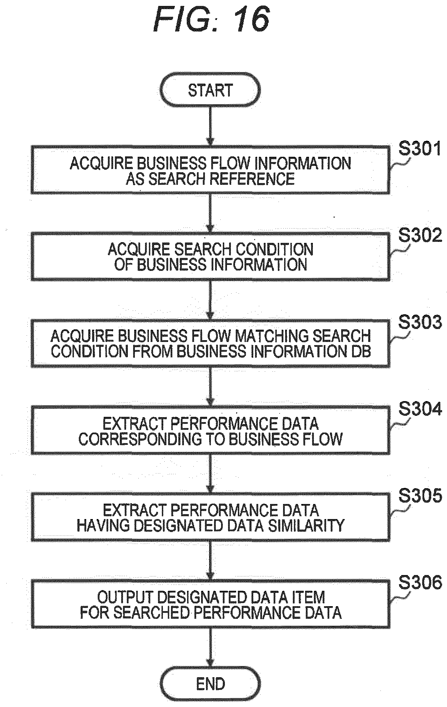

Next, in the business information management server 1, the control unit 12 (the business information management program 161) executes the similar business flow search and the similar performance data search on the basis of the information received in step S202, thereby searching and extracting the performance data corresponding to the search condition from the business flow associated with the past performance data (step S203). Information regarding the business flow associated with the past performance data is stored in various DBs of the internal storage device 16. A detailed.processing procedure of the processing in step S203 will be described with reference to FIG. 16.

Next, the business information management server 1 provides the business information management terminal 2 with predetermined information including the performance data extracted in step S203 by outputting the predetermined information to the reference business flow setting screen (step S204). As a result, the user of the business information management terminal 2 can know performance data similar to the performance data designated by the user from the business flow similar to the reference business flow. The above is the overall flow of the performance data search processing.

FIG. 16 is a flowchart illustrating a processing procedure example of the performance data search processing in the business information management server 1. The processing illustrated in FIG. 16 corresponds to the processing in step S203 in FIG. 15, and is implemented by the control unit 12 executing the business information management program 161.

According to FIG. 16, first, the control unit 12 acquires information on a business flow as a search reference from the reference business flow information DB 164 (step S301). Here, the business flow as the search reference is specifically a business flow illustrated in a reference business flow 411 in a performance data search screen 410 of FIG. 17 to be described later.

Next, the control unit 12 acquires a search condition for similarity of the business flow (business information) (step S302). Specifically, the search condition acquired in step S302 corresponds to input values of the number of businesses difference 415 and the number of items difference 416 on the performance data search screen 410 in FIG. 17 to be described later.

Next, the control unit 12 refers to the business information DB 163 to search for a business flow matching the search condition acquired in step S302, and acquires information regarding the corresponding business flow (similar business flow) from the business information DB 163 (step S303) .

Next, the control unit 12 extracts performance data for each of the similar business flows extracted in step S303 with reference to the business performance information DB 167 and the business-related element performance information DB 168 (step S304).

Next, the control unit 12 extracts performance data matching a similarity search condition of the performance data from the performance data of the similar business flow extracted in step S304 (step S305). Here, the similarity search condition of the performance data specifically corresponds to an input value of the data similarity 417 on the performance data search screen 410 of FIG. 17 to be described later. The performance data extracted in step S705 is referred to as similar performance data.

Then, the control unit 12 extracts the performance data corresponding to the item (in the case of the performance data search screen 410 of FIG. 17 to be described later, the items 1, 7, and 9) designated as the extraction target of the performance data search from the similar performance data extracted in step S305, and outputs the performance data to the performance data search screen (step S306).

As described above, by performing the processing of steps S301 to S306, information regarding similar performance data matching the search condition is displayed in a search result 419 of the performance data search screen 410 in FIG. 17 described later.

FIG. 17 is a diagram illustrating an example of the performance data search screen. The performance data search screen 410 illustrated in FIG. 17 is a GUI provided from the business information management server 1 to the business information management terminal 2 when performance data search is performed using a search condition of the business flow and similarity of the performance data, and is operated by the user of the business information management terminal 2.

On the performance data search screen 410 of FIG. 17, a reference business flow as a search reference is selected and displayed in the reference business flow 411. For example, the reference business flow is selected by the user from among the business flows registered in the reference business flow information DB 164. In addition, an extraction target item 412 is an item of performance data designated by the user as an extraction target of performance data search, and a plurality of items can be selected. For example, in the case of FIG. 17, in the business-related element of a processed product A having the business-related element items of items 1 to 4, the performance data of item 1 surrounded by a thick frame is designated as the extraction target item of similar performance data.

On the performance data search screen 410, a search condition designated by the user when performing performance data search is input to a data search condition 413. As illustrated in FIG. 17, a plurality of types of search conditions can be input to the data search condition 413. A "search starting point business" and a "search end point business" are search conditions that designate the width of the business to be searched. The "start date and time" and the "end date and time" are search conditions that designate an execution period of business to be searched (which may be an execution period of performance data).

In a similarity 414, a search condition regarding similarity is input, and specifically, a number of businesses difference 415, a number of items difference 416, and data similarity 417 are prepared. Among them, the number of businesses difference 415 and the number of items difference 416 are search conditions related to the similarity of the business flow, and the data similarity 417 is a search condition related to the similarity of the performance data.

In the number of businesses difference 415, the number of businesses constituting the business flow is designated as one of the conditions of similarity to the reference business flow. In the number of items difference 416, the number of business-related elements (which may be read as the number of business items in the business information) constituting the business flow is designated as one of the conditions of similarity to the reference business flow.

In the data similarity 417, a similarity set obtained by combining various conditions is designated as a condition of similarity of the performance data. For example, "Raw material 1: A group" indicated in the data similarity 417 in FIG. 17 means that another raw material may be used as long as the raw material 1 is in the A group. The similarity set is selected from the performance similarity information DB 169. The setting of the similarity set will be described later with reference to FIG. 19 and the like.

When an output button 418 is pressed after various inputs are completed in the data search condition 413, execution of performance data search based on the input contents of the reference business flow 411, the extraction target item 412, and the data search condition 413 is determined. At this time, the-input contents are transmitted to the business information management server 1, the business information management server 1 performs the performance data search processing illustrated in FIG. 16, and the result is output to the search result 419.

In the search result 419, the execution result of the performance data search processing based on the data search condition 413 is displayed. In the case of FIG. 17, the search result 419 indicates the difference between the combination of the performance data (performance value) for each item designated as the extraction target and the reference business flow for each similar business flow matching the search condition. Note that the display format of the search result is not limited to the example of FIG. 17.

As described above, by performing the performance data search processing, the business information management system according to the present embodiment can search for a business flow similar to a business flow as a reference (reference business flow) from among business flows associated with past performance data, and extract performance data similar to desired data from among these business flows. That is, according to the business information management system according to the present embodiment, it is possible to search for similar performance data along the flow of the business process.

FIG. 18 is a diagram illustrating an example of the reference business flow setting screen. A reference business flow setting screen 420 illustrated in FIG. 18 is a GUI provided from the business information management server 1 to the business information management terminal 2 in order to register the reference business flow selectable in the performance data search in the reference business flow information DB 164, and is operated by the user of the business information management terminal 2.

In the reference business flow setting screen 420 of FIG. 18, the name of the business (corresponding to the business name 1632) constituting the reference business flow to be registered is input in the field of a target business name 421. In the field of a previous business name 422, the name of the business to be connected to the front side of the business of the target business name 421 is input, and is added as the previous business when a previous business addition button 423 is pressed. In the field of a post-business name 424, the name of a business to be connected to the back side of the business of the target business name 421 is input, and when a post-business addition button 425 is pressed, it is added as a post-business. When a setting button 426 is pressed, the information input to the reference business flow setting screen 420 is registered in the reference business flow information DB 164. The reference business flow is registered in the reference business flow information DB 164 by repeatedly executing the above-described operation for each business constituting the reference business flow. Note that the reference business flow setting screen 420 is configured to be able to set a plurality of previous businesses or post-businesses for one business (target business). A plurality of previous businesses are set when business merging is indicated, and a plurality of post-businesses are set when business branching is indicated.

### (2-3) Setting of data similarity

Next, setting of data similarity will be described.

FIG. 19 is a diagram illustrating an example of a data similarity setting screen. A data similarity setting screen 430 illustrated in FIG. 19 is a GUI provided from the business information management server 1 to the business information management terminal 2 when the data similarity (similarity set) is registered in the performance similarity information DB 169 by the user's operation, and is operated by the user of the business information management terminal 2.

In the data similarity setting screen 430 of FIG. 19, the name of the similarity set to be registered is input to a similarity name 431. Information (for example, a business name or a business-related element name) indicating a business or a business-related element as a target of similarity determination is input to a similarity target element 432. Information (for example, a business item ID or a business-related item ID) indicating an item of business or a business-related element as a target of similarity determination is input to a similarity item 433. A specific determination condition of similarity with respect to the performance data (performance value) of the item indicated in the similarity item 433 is input to a similarity determination condition 434. For example, in a case where "manufacturer: oo company" is input, it means that it is determined that the similarity is satisfied if the performance value of the item has "oo company" as a manufacturer. Note that a plurality of determination conditions can be input to the similarity determination condition 434 by pressing a condition addition button 435. Then, when a registration button 436 is pressed after each input described above is completed on the data similarity setting screen 430, the input content is registered in the performance similarity information DB 169. In this manner, the similarity set registered in the performance similarity information DB 169 can be input (selected) with the data similarity 417 on the performance data search screen 410.

Meanwhile, the data similarity setting screen 430 illustrated in FIG. 19 is for.registering the similarity set when the user inputs each item, but the business information management server 1 according to the present embodiment can be configured such that the business information management program 161 automatically generates a candidate of data similarity (similarity set) from the reference business flow by causing the user to set the reference business flow and a threshold allowable as similarity. Hereinafter, setting of data similarity using such automatic generation of data similarity will be described.

FIG. 20 is a diagram illustrating another example of the data similarity setting screen. A data similarity setting screen 440 illustrated in FIG. 20 is a GUI provided from the business information management server 1 to the business information management terminal 2 when the data similarity (similarity set) is registered in the performance similarity information DB 169 using automatic generation, and is operated by the user of the business information management terminal 2.

On the data similarity setting screen 440 of FIG. 20, a business flow as a reference for generating a data similarity candidate is selected and displayed in a reference business flow 441. Similarly to the reference business flow 411 on the performance data search screen 410, the reference business flow 441 is selected by the user from among the business flows registered in the reference business flow information DB 164, for example.

In similarity threshold setting 442, a similarity threshold allowed for the data similarity candidate is set. Although the method of implementing the similarity threshold setting 442 is not particularly limited, for example, similar to the performance data search screen 410 in FIG. 17, a setting region of an allowable range for each of the number of businesses difference and the number of items difference is arranged (see the number of businesses difference 415 and the number of items difference 416 in FIG. 17).

Then, when a data similarity candidate generation button 443 is pressed after the reference business flow 441 and the similarity threshold setting 442 are input, the data similarity candidate generation processing illustrated in FIG. 21 is executed by the control unit 12.

In a data similarity candidate generation result 444, candidates of a similarity set (data similarity) are displayed as a processing result of the data similarity candidate generation processing. Specifically, the candidate of the similarity set displays, for performance data similar to the reference business flow within a range of a similarity threshold, a difference in configuration from the reference business flow (Similarity Target Element, Similarity Item), and a determination condition covering a difference from the performance data of the reference business flow (data similarity determination condition). Then, when the user presses a registration button 445 after checking the desired "select" field, the selected similarity set (data similarity) is registered in the performance similarity information DB 169.

FIG. 21 is a flowchart illustrating a processing procedure example of data similarity candidate generation processing.

According to FIG. 21, first, the control unit 12 acquires, from the reference business flow information DB 164 and the like, information on a business flow as a generation reference of a data similarity candidate (step S401) . Specifically, the business as the generation reference is the business flow illustrated in the reference business flow 441 on the data similarity setting screen 440 of FIG. 20.

Next, the control unit 12 refers to the business performance information DB 167 and acquires performance data of a business flow that satisfies the condition of the number of businesses difference designated by the similarity threshold setting 442 for the reference business flow acquired in step S401 (step S402). The performance data acquired in step S402 is performance data to be compared. When the number of businesses difference is not designated in the similarity threshold setting 442, all the business flows may be compared, or the business flow selected by a predetermined method may be compared.

Next, the control unit 12 selects the performance data of the reference business flow and the performance data of the business flow to be compared one by one (step S403).

Next, the control unit determines whether or not the difference between the items of the performance data is equal to or less than a predetermined threshold (specifically, it is within the range of the number of items difference designated by the similarity threshold setting 442) in the combination of the performance data selected in step S403 (Step S404). In a case where it is equal to or less than the threshold in step S404 (YES in step S404), the process proceeds to step S405, and a condition of data similarity is generated on the basis of a difference between items of performance data, and then the process proceeds to step S406. The condition of data similarity generated in step S405 corresponds to the similarity determination condition 434 illustrated on the data similarity setting screen 430 in FIG. 15, and a determination condition covering a difference from the performance data of the reference business flow is generated. On the other hand, in a case where the difference exceeds the threshold in step S404 (NO in step S404), the process proceeds to step S406.

In step S406, the control unit 12 determines whether the processing in steps S403 to S404 (or up to S405) has been performed on all the performance data to be compared acquired in step S402, and proceeds to step S407 in a case where the processing has been completed for all combinations of the performance data to be compared.

Then, in step S407, the control unit 12 creates a similarity set including the difference from the reference business flow and the condition generated in step S405 for each of the performance data to be compared determined to be equal to or less than the predetermined threshold in step S404, and outputs the similarity set to the data similarity candidate generation result 444 of the data similarity setting screen 440.

Thereafter, as described with reference to FIG. 20, when the user selects a similarity set to be registered from the data similarity candidate generation result 444 and presses the registration button 445, the desired similarity set (data similarity) is registered in the performance similarity information DB 169.

### (2-4) Performance data search using reliability

In the business information management system according to the present embodiment, as a modification of the performance data search described above with reference to FIGS. 15 to 18, it is possible to execute performance data search in which the reliability with respect to the performance data of the past business flow is added to the search condition. Hereinafter, first, setting of the reliability will be described, and then performance data search using the reliability will be described.

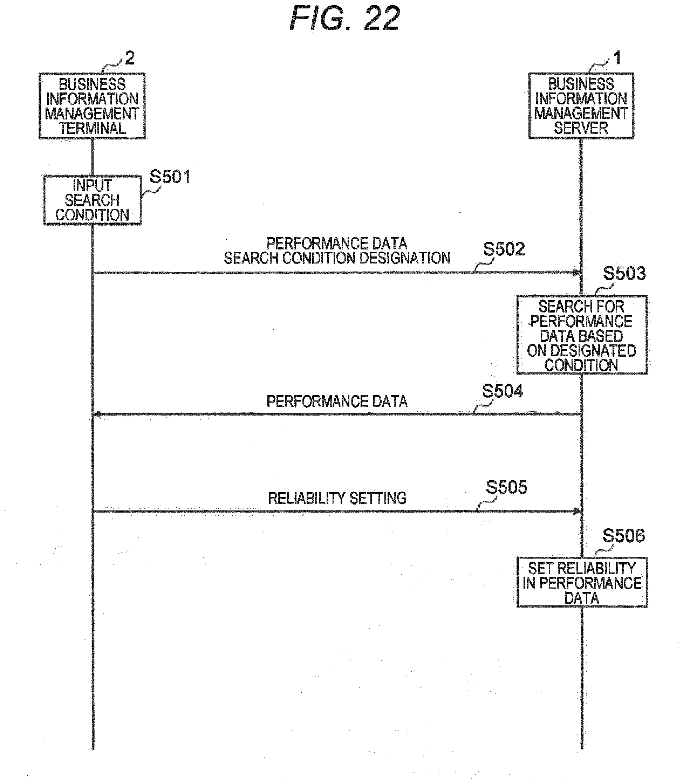

FIG. 22 is a sequence diagram illustrating an overall processing procedure example of reliability setting processing. FIG. 22 illustrates exchange between the business information management terminal 2 and the business information management server 1 according to the setting of the reliability. As described above, the reliability is an evaluation value for business performance (for example, an experimental result of business) and is set by the user.

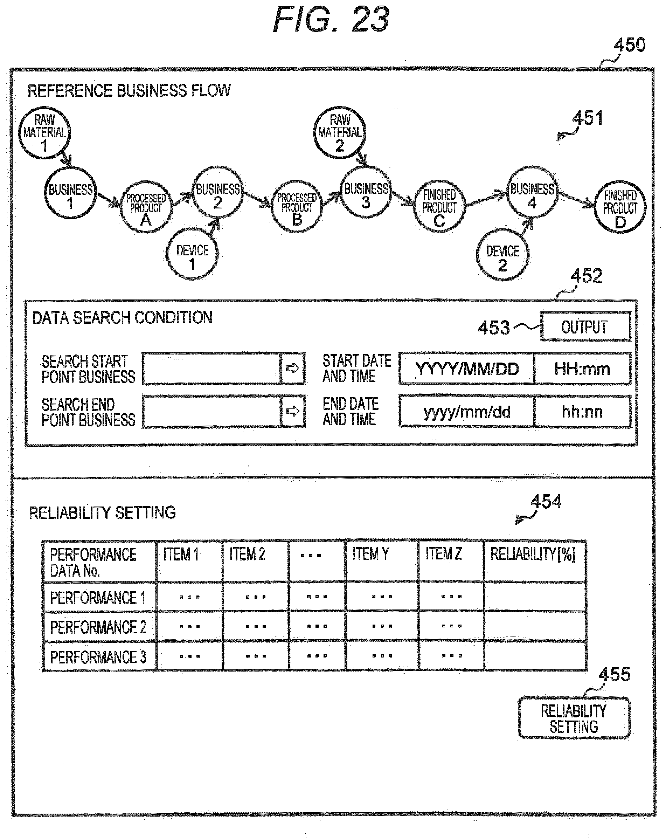

According to FIG. 22, first, in the business information management terminal 2, the user inputs a search condition for narrowing down the business flow to the reliability setting screen provided from the business information management server 1 (step S501). Here, the search condition for narrowing down the business flow specifically corresponds to setting contents of a data search condition 452 on the reliability setting screen 450 of FIG. 23 to be described later. Note that, in step S501, a reference business flow as a reference for narrowing down the business flows is also designated.

Next, with an operation (specifically, pressing an output button 453 on the reliability setting screen 450 in FIG. 23) instructing execution of narrowing down the business flow on the reliability setting screen as a trigger, the control unit 22 of the business information management terminal 2 transmits the above execution instruction to the business information management server 1 with the search condition input in step S501 added (step S502). At this time, information specifying the reference business flow designated in step S501 is also transmitted to the business information management server 1.

Next, in the business information management server 1, the control unit 12 (the business information management program 161) searches for the business flow corresponding to the search condition from among the business flows associated with the past performance data on the basis of the information received in step S502, and extracts the performance data (step S503).

Next, the business information management server 1 outputs the performance data of the business flow extracted in step S503 to the reliability setting screen to provide the performance data to the business information management terminal 2 (step S504). Specifically, the performance data is displayed in the reliability setting 454 on the reliability setting screen 450 of FIG. 23.

Next, in the business information management terminal 2, when the user performs an operation of setting the reliability on the performance data for each business flow displayed on the reliability setting screen, information on the reliability to be set is transmitted to the business information management server 1 (step S505). Specifically, the operation of setting the reliability corresponds to an operation of pressing the reliability setting button 455 after inputting a numerical value in the "reliability" field of the reliability setting 454 on the reliability setting screen 450 of FIG. 23.

Then, the business information management server 1 registers the reliability received in step S505 in the DB (the reliability 1674 of the business performance information DB 167) of the storage destination of the corresponding performance data, and ends the reliability setting processing.

FIG. 23 is a diagram illustrating an example of the reliability setting screen. The reliability setting screen 450 illustrated in FIG. 23 is a GUI provided from the business information management server 1 to the business information management terminal 2 when setting the reliability, and is operated by the user of the business information management terminal 2. Note that the display configuration of the reliability setting screen 450 of FIG. 23 is common to the performance data search screen 410 of FIG. 17 in many parts, and detailed description of the common display configuration will be omitted.

On the reliability setting screen 450 of FIG. 23, a reference business flow as a reference for narrowing down the business flow is selected and displayed in a reference business flow 451. A search condition for narrowing down the business flow is input to the data search condition 452. Specifically, the "search start point business" and the "search end point business" that designate the width of the business to be searched, and the "start date and time" and the "end date and time" that designate the execution period of the business to be searched (which may be the execution period of the performance data). When the output button 453 is pressed after various inputs are completed in the data search condition 452, the search described in step S503 of FIG. 22 is executed using the input search condition, and the result is output to the reliability setting 454.

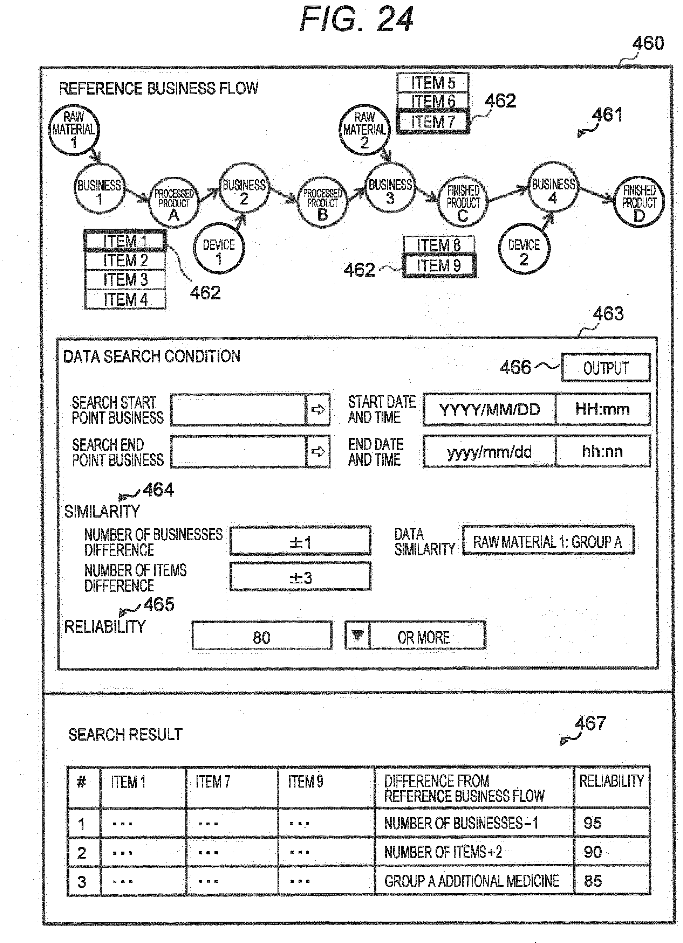

Then, in the reliability setting 454, when the user inputs an arbitrary reliability in the field of "reliability" and then presses the reliability setting button 455, the reliability of the set performance data is registered in the reliability 1674 of the business performance information DB 167. Using the reliability registered in this manner, performance data search described later with reference to FIG. 24 can be executed.

FIG. 24 is a diagram illustrating another example of the performance data search screen. A performance data search screen 460 illustrated in FIG. 24 is a GUI provided from the business information management server 1 to the business information management terminal 2 when performance data search is performed in which the reliability with respect to the past performance data is added to the search condition of the business flow and the similarity of the performance data, and is operated by the user of the business information management terminal 2. Note that, in the display configuration of the performance data search screen 460 in FIG. 24, detailed description of the configuration common to the performance data search screen 410 in FIG. 17 will be omitted.

In the performance data search screen 460 of FIG. 24, a reference business flow as a search reference is selected and displayed in the reference business flow 461. An extraction target item 462 is an item of performance data designated by the user as an extraction target of performance data search, and a plurality of items can be selected.

On the performance data search screen 460, a search condition designated by the user when performing performance data search is input to a data search condition 463. Similarly to the data search condition 413 on the performance data search screen 410 in FIG. 17, the data search, condition 463 includes a search condition of similarity 464. On the other hand, as a configuration different from the data search condition 413 in the performance data search screen 410 in FIG. 17, a setting field of a reliability 465 is provided in the data search condition 463. In the reliability 465, a search condition of the reliability for the performance data extracted as a search result of the performance data search is set. For example, in the case of FIG. 24, "80" and "or. more" are displayed in the setting field.of the reliability 465, which means that only the performance data with the reliability of 80% or more is extracted as the search result.

When an output button 466 is pressed after various inputs are completed in the data search condition 463, execution of performance data search based on the input contents of the reference businessflow 461, the extraction target item 462, and the data search condition 463. is determined. In the performance data search processing executed by the business information management server 1 at this time, processing of extracting performance data matching the setting content of the reliability 465 may be added after step S305 illustrated in FIG. 16.

In a search result 467, the execution result of the performance data search processing based on the data search condition 463 is displayed. In the case of FIG. 24, the search result 467 indicates the combination of the performance data (performance value) for each item designated as the extraction target and the difference from the reference business flow for each similar business flow matching the search condition. Note that the reliability of each similar business flow is displayed in the field of "reliability" of the search result 467 in FIG. 24.

As described above, by performing the performance data search processing in which the reliability is added to the search condition, the business information management system according to the present embodiment can search for a business flow similar to the business flow as a reference (reference business flow) from among the business flows associated with the past performance data, and extract performance data similar to desired data from among these business flows while limiting the performance data to the performance data satisfying the designated reliability. Therefore, it is possible to realize more reliable search of the performance data than in the case of the performance data search processing not having the reliability in the search condition.

### (2-5) Factor analysis of performance data

The business information management system according to the present embodiment can perform factor analysis on the performance data searched using similarity as an additional function to the performance data search function described above.

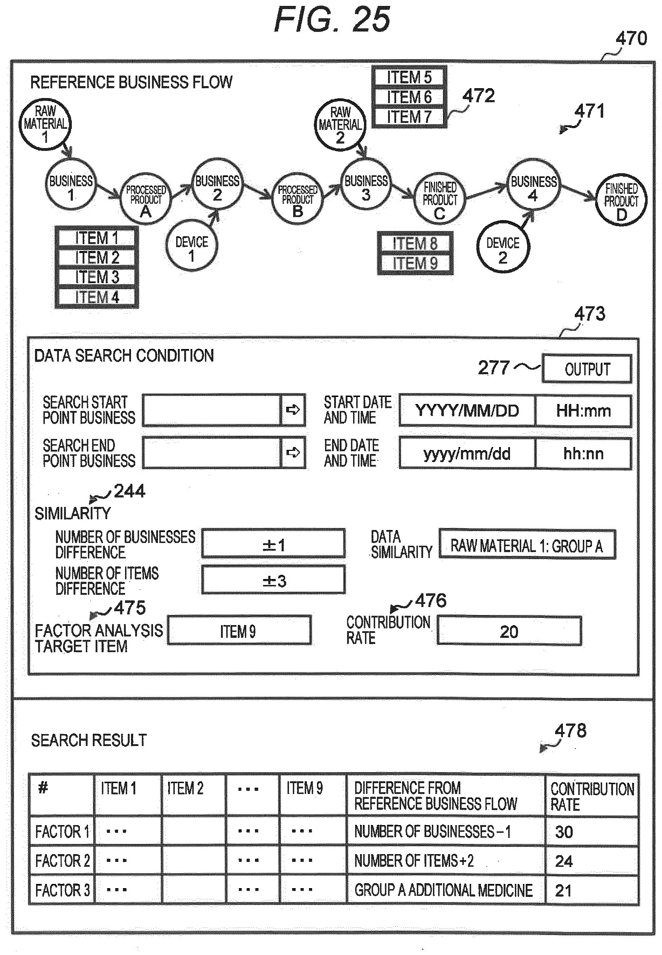

FIG. 25 is a diagram illustrating an example of a performance data factor analysis screen. A performance data factor analysis screen 470 illustrated in FIG. 25 is a GUI provided from the business information management server 1 to the business information management terminal 2 when performing factor analysis on performance data searched using similarity, and is operated by the user of the business information management terminal 2. Note that the display configuration of the performance data factor analysis screen 47.0 in FIG. 25 is common to the performance data search screen 410 in FIG. 17 in many parts, and detailed description of the common display configuration will be omitted.

In the performance data factor analysis screen 470 of FIG. 25, a reference business flow as a search reference is selected and displayed in a reference business flow 471. An extraction target item 472 is an item of performance data designated by the user as an extraction target of performance data search, and a plurality of items can be selected. Specifically, in the case of FIG. 25, items 1 to 4 of the business-related element "processed product A", items 5 to 7 of the business-related element "raw material 2", and items 8 to 9 of the business-related element "product C" are designated as extraction targets.

In the performance data factor analysis screen 470, a search condition for performance data search designated by the user is input to a data search condition 473. Similarly to the data search condition 413 on the performance data search screen 410 in FIG. 17, the data search condition 473 includes a search condition of similarity 474. On the other hand, as a configuration different from the data search condition 413 in the performance data search screen 410 in FIG. 17, the data search condition 473 is provided with setting fields of a factor analysis target item 475 and a contribution rate 476. In the factor analysis target item 475, an item of performance data as a target of factor analysis (in other words, a target item of contribution rate calculated by factor analysis) is input. In the contribution rate 476, a threshold as a reference of whether or not to output the contribution rate calculated by the factor analysis as a search result is input. For example, in the case of FIG. 25, a factor of which the contribution rate to the "item 9" exceeds "20%" is output to a search result 478.

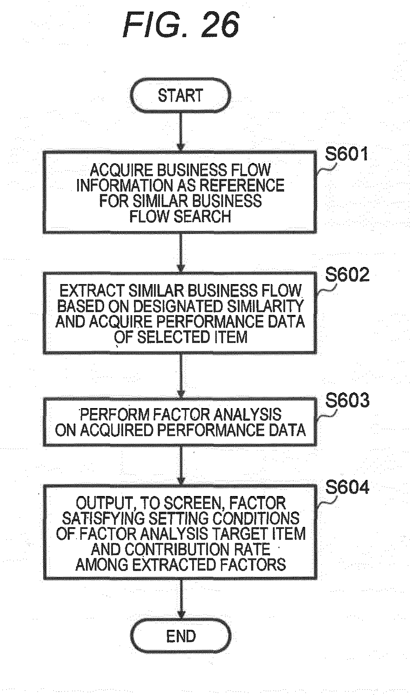

When an output button 477 is pressed after various inputs are completed in the data search condition 473, performance data factor analysis processing illustrated in FIG. 26 to be described later is executed, so that a result of performing factor analysis on the search result of the performance data matching the search condition of similarity is output to the search result 478. More specifically, by the performance data factor analysis processing executed by the control unit 12 of the business information management server 1, performance data search is executed on the basis of the data search condition 473 other than the factor analysis target item 475 and the contribution rate 476, factor analysis is performed on the performance data (in the case of FIG. 25, similar performance data of items 1 to 9) obtained as a result of the search under the conditions of the factor analysis "target item 475 and the contribution rate 476, and a result of the factor analysis is output to the search result 478.

In the search result 478, the execution result of the performance data factor analysis processing based on the data search condition 473 is displayed. In the case of FIG. 25, in the search result 478, the value of the similar performance data, the difference (difference) from the reference business flow, and the contribution rate (however, limited to those exceeding the threshold of the contribution ratio 476) to the factor analysis target item are displayed for each factor extracted by performing the factor analysis on the similar performance data extracted by the performance data search.

FIG. 26 is a flowchart illustrating a processing procedure example of performance data factor analysis processing. The performance data factor analysis processing is processing of searching for performance data on the basis of a similarity search condition and performing factor analysis on the performance data, and is realized by the control unit 12 of the business information management server 1 executing the business information management program 161 with pressing of the output button 477 on the performance data factor analysis screen 470 illustrated in FIG. 25 as a trigger.

According to FIG. 26, first, the control unit 12 acquires, from the reference business flow information DB 164, information on a business flow as a search reference of a similar business flow (step S601). The business flow as the search reference of the similar business flow is the business flow illustrated in the reference business flow 471 on the performance data factor analysis screen 470 in FIG. 25.,

Next, the control unit 12 executes performance data search processing similar to steps S302 to S305 in FIG. 16 on the basis of the search condition including the similarity designated by the data search condition 473 on the performance data factor analysis screen 470 (step S602). Specifically, the control unit 12 searches for business flows similar to the reference business flow for which the information has been acquired in step S601 using the search condition of the search start point business, the search end point business, the start date and time, the end date and time, the number of businesses, difference, and the number of items difference designated by the data search condition 473, performs similarity determination on the performance data of each of the corresponding business flows using the search condition of data similarity, and extracts a business flow having performance data matching the search condition of data similarity. Furthermore, the control unit 12 acquires performance data of each item (in the case of the performance data factor analysis screen 470 of FIG. 25, items 1 to 9) selected in the extraction target items 472 from the extracted performance data of the business flow. The performance data of the predetermined item for each past business flow acquired in this manner is a factor of the factor analysis to be executed next.

Next, the control unit 12 performs factor analysis on the performance data acquired in step S602, and calculates a contribution rate to the item (in the case of FIG. 25, item 9) designated in the factor analysis target items 475 (step S603). The factor analysis performed in step S603 is, for example, a factor analysis using machine learning, and a conventionally known factor analysis method may be adopted, and thus a specific description thereof will be omitted.

Then, the control unit 12 extracts, from each factor of which the contribution rate has been calculated in step S603, a factor of which the contribution rate exceeds a threshold (in the case of FIG. 25, 20%) designated as the contribution rate 476, and outputs information regarding the extracted factor to the search result 478 of the performance data factor analysis screen 470 (step S604).

By performing the performance data factor analysis processing as described above, the business information management server 1 can extract a factor having a high degree of contribution to the target item (item 9) from a set (factor) of performance data matching the search condition of the business flow and the similarity of performance data, and provide the factor to the user through the search result 478 of the performance data factor analysis screen 470. As a result, the user can efficiently search for a business flow that can be expected for the result quality.

Note that the present invention is not limited to the above-described embodiments, and includes various modifications. For example, the above-described embodiments have been described in detail in order to explain the present invention in an easy-to-understand manner, and are not necessarily limited to those having all the described configurations. In addition, it is possible to add, delete, and replace other configurations for a part of the configuration of the embodiment.

Further, control lines and information lines indicate what is considered to be necessary for the description, and not all control lines and information lines in the product are necessarily shown. In practice, almost all configurations may be considered to be mutually connected.

### Reference Signs List

- 1: business information management server
- 2: business information management terminal
- 3: business information collection terminal
- 4: data generation device
- 5: site
- 6: network
- 7: operation management center

- 10, 20, 30: network interface
- 12, 22, 32: control unit (CPU)
- 14, 24, 34: external storage device
- 16, 26, 36: internal storage device
- 18, 28, 38: bus

- 21: input/output device
- 161: business information management program
- 163: business information DB
- 164: reference business information DB
- 165: business-related element information DB
- 167,: business performance information DB
- 168: business-related element performance information DB
- 169: performance similarity information DB
- 170: business information
- 171: business node
- 172: business-related element node
- 177: component node
- 261: business information setting program
- 361: business performance information management program
- 363: device operation information DB
- 410: performance data search screen
- 420: reference business flow setting screen
- 430: data similarity setting screen
- 440: data similarity setting screen
- 450: reliability setting screen
- 460: performance data search screen
- 470: performance data factor analysis screen

## Claims

1. A business information management system that manages business information related to each business process of each business flow for a plurality of business flows each including one or more business processes, the business information management system comprising:
a data generation device that generates performance data in the business process; and
a business information management server that collects performance data generated by the data generation device and manages the performance data in association with a configuration of the executed business flow,
wherein the business information management server includes:
a performance data collection unit that collects performance data of each business process from the data generation device for each of the business flows, and stores the collected performance data in a storage device in association with a business in the business process and a related element related to the business; and
a performance data search unit' that, when a business flow and a search condition regarding similarity of performance data are designated together with a reference business flow that is a business flow as a reference, extracts a business flow similar to the reference business flow from among a plurality of business flows associated with the performance data stored in the storage device on a basis of the search condition, extracts performance data similar to performance data of the reference business flow from among the performance data of the extracted business flow, and outputs an extraction result.

2. The business information management system according to claim 1, wherein when one or more items in the business or the related element are designated as extraction target items of the similar performance data, after extracting the performance data similar to the performance data of the reference business flow, the performance data search unit extracts and outputs performance data in the extraction target item from among the extracted performance data.

3. The business information management system according to claim 1, wherein the search condition related to the similarity of the business.flow includes at least one of a difference in a number of businesses designating an allowable range of similarity with respect to a total number of the businesses included in the reference business flow or a difference in a number of items designating an allowable range of similarity with respect to a total number of the related elements included in the reference business flow.

4. The business information management system according to claim 1, wherein one or more similarity determination conditions as an allowable.range of similarity with respect to the performance data are set for an arbitrary item of the business or the related element as the search condition related to the similarity of the performance data.

5. The business information management system according to claim 1, wherein
the business information management server further includes a data similarity candidate generation unit that:
compares performance data of the reference business flow with performance data of a plurality of business flows associated with the performance data stored in the storage device on a basis of threshold setting designated by a user,
specifies one or more similarity determination conditions as an allowable range of similarity for performance data of the business flow that satisfies the threshold setting, on a basis of a difference from the performance data of the reference business flow, and
generates a candidate of a similarity set selectable as a search condition related to the similarity of the performance data using the specified similarity determination conditions.

6. The business information management system according to claim 1, wherein
a reliability of performance data of each business flow can be set by a user for a plurality of business flows associated with the performance data stored in the storage device, and
in a case where a search condition related to the reliability is designated when the similar performance data is searched, the performance data search unit extracts performance data similar to the performance data of the reference business flow, and then extracts and outputs performance data satisfying the reliability designated by the search condition from among the extracted performance data.

7. The business information management system according to claim 1, wherein the business information management server further includes a performance data factor analysis unit that performs factor analysis on an extraction result of the similar performance data extracted by, the performance data search unit using a predetermined method with a predetermined item in the business or the related element designated by a user as an analysis target, and outputs, as an analysis result, performance data in which a contribution rate to the predetermined item of the analysis target exceeds a predetermined threshold.

8. A data search method by a business information management system that manages business information related to each business process of each of a plurality of business flows each including one or more business processes, the business information management system including:
a data generation device that generates performance data in the business process; and
a business information management server that collects performance data generated by the data generation device and manages the performance data in association with a configuration of the executed business flow,
the data search method comprising:
a performance data collection step of collecting, by the business information management server, performance data of each business process from the data generation device for each of the business flows, and storing the collected performance data in a storage device in association with a business in the business process and a related element related to the business; and
a performance data search step of, when a business flow and a search condition regarding similarity of performance data are designated together with a reference business flow that is a business flow as a reference, extracting, by the business information management server, a business flow similar to the reference business flow from among a plurality of business flows associated with the performance data stored in the storage device on a basis of the search condition, extracting performance data similar to performance data of the reference business flow from among the performance data of the extracted business flow, and outputting an extraction result.
